# EUROPEAN PATENT SPECIFICATION

(11) **EP 3 439 982 B1**
(45) Date of publication and mention of the grant of the patent: **09.12.2020**
(21) Application number: 17716647.7
(22) Date of filing: 05.04.2017
(51) Int. Cl.: B65D 25/40, A61J 11/00, B65D 25/42, B65D 25/48, B65D 75/58

(54) **FEEDING SPOUT, PACKAGE COMPRISING A FEEDING SPOUT AND METHOD OF PRODUCING A FEEDING SPOUT.**
ZUFÜHRTÜLLE, VERPACKUNG MIT EINER ZUFÜHRTÜLLE UND VERFAHREN ZUR HERSTELLUNG EINER ZUFÜHRTÜLLE.
BEC D'ALIMENTATION, EMBALLAGE COMPRENANT UN BEC D'ALIMENTATION ET PROCÉDÉ DE FABRICATION D'UN BEC D'ALIMENTATION

(30) Priority: 08.04.2016 US 201662319872 P
(43) Date of publication of application: 13.02.2019
(73) Proprietor: Société des Produits Nestlé S.A., 1800 Vevey (CH)
(72) Inventor: GENAW JR., Joel Dean, Hesperia, Michigan 49421 (US); SMITH-SIMPSON, Sarah Elizabeth, Rockford, Michigan 49341 (US); SMITH, Christopher Robert, East Grand Rapids, Michigan 49506 (US); MOSSER, Sara Lynn, Nunica, Michigan 49448 (US); RODGERS, Matthew Blake, Grand Haven, Michigan 49417 (US)
(74) Representative: Corticchiato, Olivier
(86) International application number: PCT/IB2017/051958
(87) International publication number: WO 2017/175153

(56) References cited:
- EP-A2- 1 275 366
- WO-A1-2014/184686
- DE-U- 6 935 930
- US-A- 2 816 547
- US-A1- 2007 025 807
- US-A1- 2014 097 211
- US-A1- 2015 147 430

## Description

### BACKGROUND

The present disclosure relates to a feeding spout according to the preamble of claim 1, to packages for a flowable product comprising a feeding spout, to methods of producing a feeding spout and to a packaged product comprising a package, a flowable product and a feeding spout. Various types of straws and spouts for edible products are well known in the art. For example, flexible pouches with spouts or straws are currently used in the packaging of a wide variety of food and beverage products. Flexible pouches for food and beverage products are frequently marketed for use by infants and children because the pouches are convenient and inexpensive.

US2014/097211 discloses a feeding spout for use with a food package, according to the preamble of claim 1. It also discloses a package for a flowable product, methods for producing a feeding spout and a packaged product comprising a package, a flowable product and a feeding spout.

However, current pouches have spouts and straws with large openings at the top. This format positions the product directly to the back of the mouth. This is a development concern for health care professionals who prefer spoon feeding because the spoon feeding process allows the child to start to move the product from the front to the back of their mouth. Moving product from the front to the back of the mouth allows the child to help develop oral motor skills and experience the taste and texture of the product.

To this end, a need exists for a spout that can deliver product to the front of the mouth. It is to such spouts, packaged products, and method of forming the same that the inventive concepts disclosed herein are directed.

### BRIEF DESCRIPTION OF THE DRAWINGS

The accompanying drawings, which are incorporated in and constitute a part of this specification, illustrate one or more implementations described herein and, together with the description, explain these implementations. The drawings are not intended to be drawn to scale, and certain features and certain views of the figures may be shown exaggerated, to scale or in schematic in the interest of clarity and conciseness. Not every component may be labeled in every drawing. Like reference numerals in the figures may represent and refer to the same or similar element or function. In the drawings:
FIG. 1 is a perspective view of a prior art pouch and spout.
FIG. 2 is a perspective view of a feeding spout constructed in accordance with the inventive concepts disclosed herein.
FIG. 3 is a cross sectional view of the feeding spout of FIG. 2.
FIG. 4 is an elevational view of another embodiment of feeding spout constructed in accordance with the presently disclosed inventive concepts.

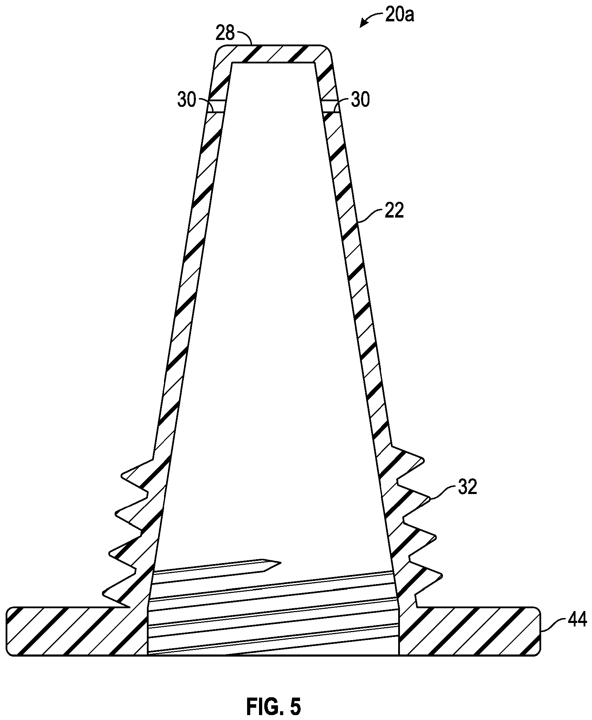

FIG. 5 is a cross sectional view taken along line 5-5 of FIG. 4.
FIG. 6 is an exploded, elevational view of the feeding spout of FIGS. 4 and 5 shown with a pouch and cap.
FIG. 7 is a perspective view of a food package with a feeding spout constructed in accordance with the inventive concepts disclosed herein.
FIG. 8 is a cutaway view of the food package of FIG. 7.
FIG. 9 is a perspective view of a cup incorporating a feeding spout not forming part of the present invention.
FIG. 10 is a cross-sectional view of a cup of FIG. 8 showing the flow of product inside the cup.

### DETAILED DESCRIPTION OF EXEMPLARY EMBODIMENTS

Before explaining at least one embodiment of the presently disclosed inventive concept(s) in detail, it is to be understood that the presently disclosed inventive concept(s) is not limited in its application to the details of construction and the arrangement of the components or steps or methodologies set forth in the following description or illustrated in the drawings. The presently disclosed inventive concept(s) is capable of other embodiments or of being practiced or carried out in various ways. Also, it is to be understood that the phraseology and terminology employed herein is for the purpose of description and should not be regarded as limiting.

Unless otherwise defined herein, technical terms used in connection with the presently disclosed inventive concept(s) shall have the meanings that are commonly understood by those of ordinary skill in the art. Further, unless otherwise required by context, singular terms shall include pluralities and plural terms shall include the singular.

All of the articles and/or methods disclosed herein can be made and executed without undue experimentation in light of the present disclosure. While the articles and methods of the presently disclosed inventive concept(s) have been described in terms of preferred embodiments, it will be apparent to those of skill in the art that variations may be applied to the articles and/or methods and in the steps or in the sequence of steps of the method described herein without departing from the concept, spirit, and scope of the presently disclosed inventive concept(s). All such similar substitutes and modifications apparent to those skilled in the art are deemed to be within the spirit, scope, and concept of the presently disclosed inventive concept(s).

As utilized in accordance with the present disclosure, the following terms, unless otherwise indicated, shall be understood to have the following meanings:

The use of the word "a" or "an" when used in conjunction with the term "comprising" in the claims and/or the specification may mean "one", but it is also consistent with the meaning of "one or more," "at least one," and "one or more than one." The use of the term "or" in the claims is used to mean "and/or" unless explicitly indicated to refer to alternatives only or that the alternatives are mutually exclusive, although the disclosure supports a definition that refers to only alternatives and "and/or." Throughout this application, the term "about" is used to indicate that a value includes the inherent variation of error for the device, the method being employed to determine the value, or the variation that exists among the study subjects. For example, but not by way of limitation, when the term "about" is utilized, the designated value may vary by plus or minus twelve percent, or eleven percent, or ten percent, or nine percent, or eight percent, or seven percent, or six percent, or five percent, or four percent, or three percent, or two percent, or one percent. The use of the term "at least one of X, Y, and Z" will be understood to include X alone, Y alone, and Z alone, as well as any combination of X, Y, and Z. The use of ordinal number terminology (i.e., "first," "second," "third," "fourth," etc.) is solely for the purpose of differentiating between two or more items and is not meant to imply any sequence or order or importance to one item over another or any order of addition, for example.

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The term "or combinations thereof as used herein refers to all permutations and combinations of the listed items preceding the term. For example, "A, B, C, or combinations thereof" is intended to include at least one of: A, B, C, AB, AC, BC, or ABC, and if order is important in a particular context, also BA, CA, CB, CBA, BCA, ACB, BAC, or CAB. Continuing with this example, expressly included are combinations that contain repeats of one or more item or term, such as BB, AAA, AAB, BBC, AAABCCCC, CBBAAA, CABABB, and so forth. The skilled artisan will understand that typically there is no limit on the number of items or terms in any combination unless otherwise apparent from the context.

As used herein, the term "substantially" means that the subsequently described event or circumstance completely occurs or that the subsequently described event or circumstance occurs to a great extent or degree. For example, when associated with a particular event or circumstance, the term "substantially" means that the subsequently described event or circumstance occurs at least 80% of the time, or at least 85% of the time, or at least 90% of the time, or at least 95% of the time. The term "substantially adjacent" may mean that two items are 100% adjacent to one another, or that the two items are within close proximity to one another but not 100% adjacent to one another, or that a portion of one of the two items is not 100% adjacent to the other item but is within close proximity to the other item.

The term "associate" as used herein will be understood to refer to the direct or indirect connection of two or more items.

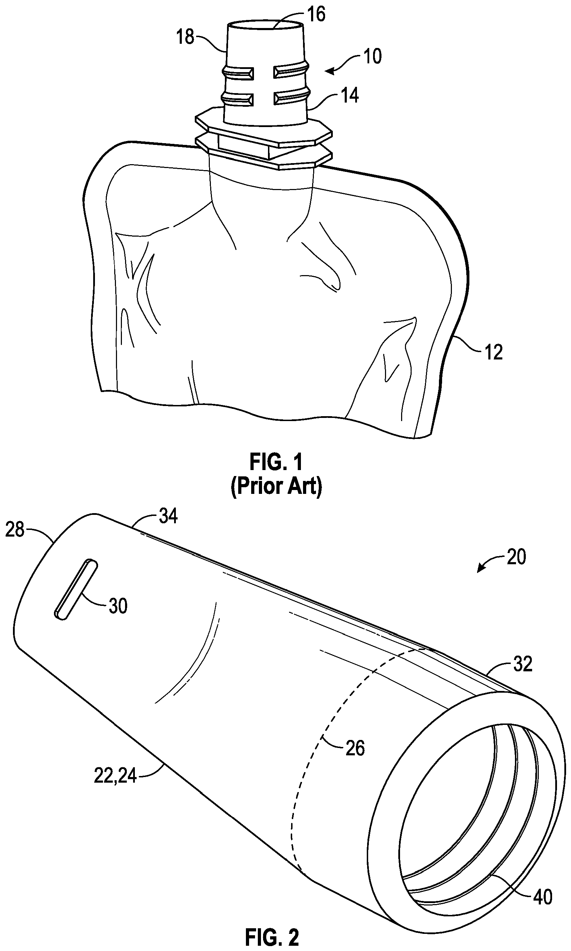

Straws and spouts for edible products are well known in the art. As shown in FIG. 1, a typical prior art food container 10 is a pouch 12 with a spout 14 having a large opening 16 on the end 18 of the spout 14. This prior art design delivers food product directly to the back of the mouth and does not allow for key developments for children learning how to eat on their own. For example, product delivery to the back of the mouth results in mere swallowing rather than moving the food from the front of the mouth to the back such as would occur with spoon feeding and other developmental eating activities.

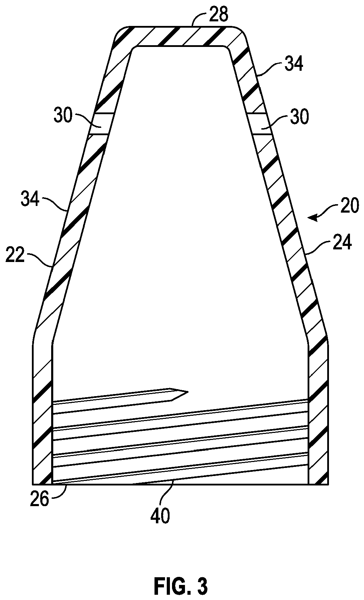

Turning now to the presently disclosed inventive concept(s) and to FIGS. 2 and 3, a feeding spout 20 constructed in accordance with the inventive concepts disclosed herein is illustrated. The feeding spout 20 is useable with a spout, such as spout 14 (FIG. 1) of a container, such as container 12 (FIG. 1). The feeding spout 20 is particularly well suited for use with containers used for flowable foods and juices which are marketed for infants and children. Flexible pouches are well known by those having ordinary skill in the art and, therefore, will not be described in detail herein. In general, the container 14 may be comprised of any non-permeable flexible material. For example, the container 14 may be made of one or more flexible sheets, such as polymer sheets or foil sheets. The container 14 may be used to contain any flowable material. Non-exclusive examples of flowable material include food, beverages, granules, and gases. In one example, the flowable material may be pureed food products or beverages designed for consumption by children.

The feeding spout 20 includes a hollow tubular portion 22 having a tube wall 24, an open end 26, and a closed end 28. The tube wall 24 has two or more slits 30 therethrough which are offset from the closed end 28. A collar portion 32 is integrally provided at the open end 26 of the hollow tubular portion 22 and is sealingly securable to the food package. The collar portion 32 of the feeding spout 20 can be configured to be threaded or press-fit or snap-fit to the spout 14 and otherwise fixed to the spout 14 in a variety of ways. For example, the feeding spout 20 can be fixed to the spout 14 with a suitable adhesive or by welding.

The slits 30 are formed in a side 34 of the hollow tubular portion 22 in a way that the product consumed therethrough is distributed to the front of the mouth. This is particularly useful for small children as it requires the child to move the product, for example a puree, from the front of the mouth to the back and to develop key skills necessary to move food about in the mouth. It also allows the product to be evenly distributed throughout the child's mouth so the child can experience all of the tastes and texture of the product. This is in contrast to the prior art spout 14 which delivers product directly to the back of the mouth, bypassing most of the motor and sensory fibers of the tongue.

In one embodiment, slits 30 are positioned at a distance of from about 2 mm to about 20 mm from the closed end 28. In another embodiment, two slits 30 through the tube wall 24 are aligned in a diametrically opposing relationship on either side of the hollow tubular portion 22. For example, but not by way of limitation, two opposing slits 30 through the tube wall 24 are aligned circumferentially at a distance of from about 2 mm to about 20 mm from the closed end 28. The sizing of the slits 30 can be readily determined by a person having ordinary skill in the art in designing the feeding spout 20 to deliver a desired amount of product.

The feeding spout 20 may be formed of any materials known in the art or otherwise contemplated by a person having ordinary skill in the art, so long as the feeding spout 20 is capable of functioning in accordance with the presently disclosed inventive concept(s). In addition, the hollow tubular portion 22 and the collar portion 32 may each be formed of the same or separate materials.

For example, but not by way of limitation, the feeding spout 20 can be formed from a rigid resin. Nonlimiting examples of suitable rigid resins include polyethylene (PE), high density polyethylene (HDPE), polypropylene (PP), polyethylene terephthalate (PET), polylactide (PLA), and the like. In one embodiment, the feeding spout is made of a high density polyethylene (HDPE), polypropylene (PP), or a combination of HDPE and PP.

In one embodiment, the feeding spout 20 is bi-injection molded to have a soft contact piece that covers most, if not all, of the contact surface. This gives a soft and inviting feel to the feeding spout 20. Examples of suitable soft resins include, but are not limited to silicone, neoprene, chloroprene rubber, ethylene propylene diene terpolymer (EPDM) and the like. In another embodiment, at least the hollow tubular portion 22 is made of silicone providing, however, that at least the threads 40 of the collar portion 32 are made of a rigid resin as described above to help keep a hermetic seal with the spout 14.

Other materials that may be used in the construction of feeding spouts are well known in the art and can easily be contemplated by a person having ordinary skill in the art, and therefore these materials also fall within the scope of the presently disclosed inventive concept(s).

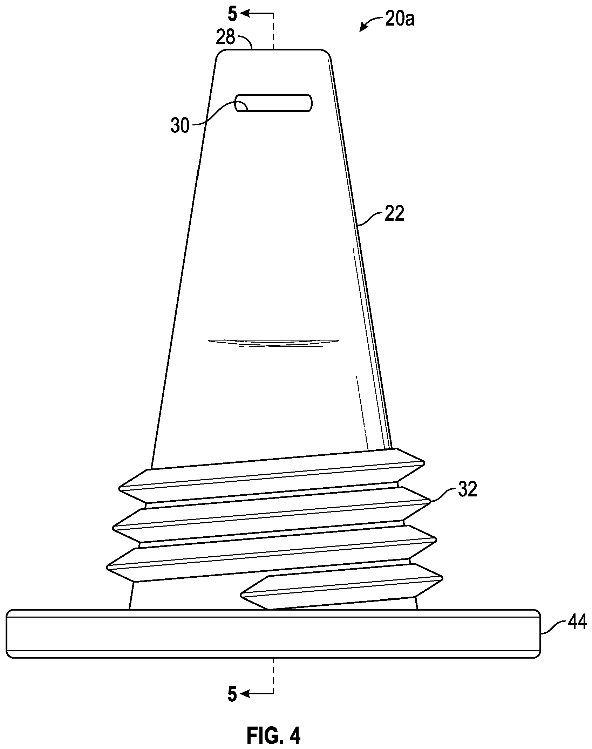

In another embodiment, and as shown in FIGS. 3 and 4, a feeding spout 20a includes a flange 44 circumferentially disposed about the collar portion 32. The flange 44 acts as a safety feature or a protective base by keeping the child's mouth from encompassing the entire feeding spout 20a. When the container 12 comprises a flexible pouch as in FIG. 1, the flange 44 also keeps the child's mouth from contacting the pouch edges. Many pouches have sharp edges where the spout and pouch edges come together, and the flange 44 can help reduce the chance of injury from such sharp edges. It also gives a more hygienic touch point for the child. With conventional pouches, children consume the product while putting the entire mouthpiece up to the pouch in the child's mouth. In contrast, the flange 44 prevents the child from inserting the entire mouthpiece up to the pouch.

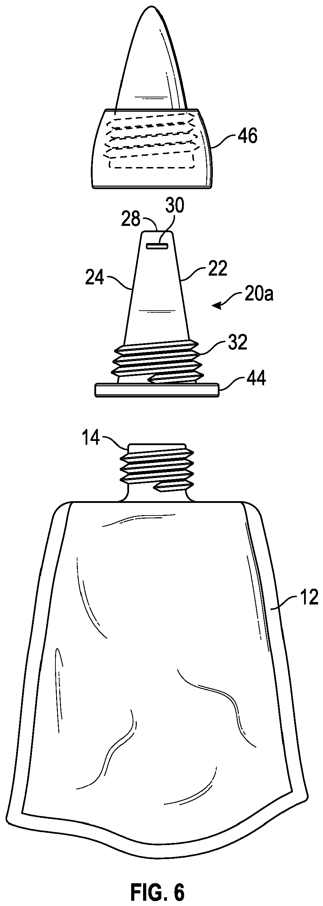

The feeding spout 20a may further include a top closure 46, such as a cap or other type of closure/sealing and/or opening device that is releasably attachable. The top closure 46, also referred to as the cap, is shown in FIG 6. The cap 46 fits the design of the feeding spout 20a and also ensures a hermetic seal through manufacturing, processing and shipping. The cap 46 can extend over the flange 44 keeping it from direct external exposure. It will also be appreciated that a cap can be utilized with the feeding spout 20.

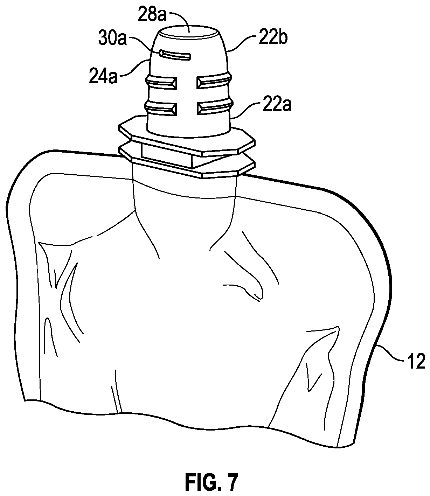

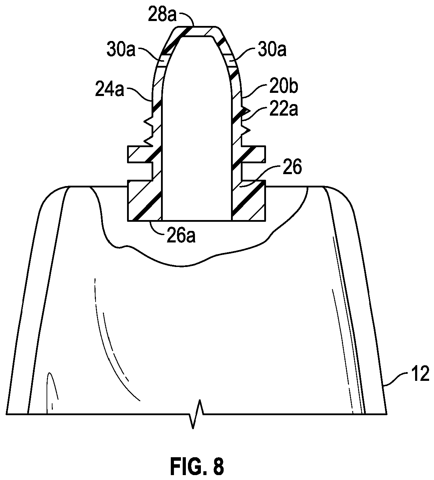

Referring now to FIGS. 7 and 8, another embodiment of a feeding spout 20b is illustrated. The feeding spout 20b is similar to the feeding spout 20 described above, except the feeding spout 20b is configured to be connected directly to container 12. The feeding spout 20b has a hollow tubular portion 22a with a tube wall 24a, an open end 26a, and a closed end 28a. The open end 26a of the tubular portion 22 may be configured in a variety of ways for securement to the food container body 42. The tube wall 24a has at least two slits 30a formed near the closed end 28a and in a diametrically opposed relationship. As discussed above, the slits 30a cause fluid from the main food container body 42 to be discharged into the front of a user's mouth.

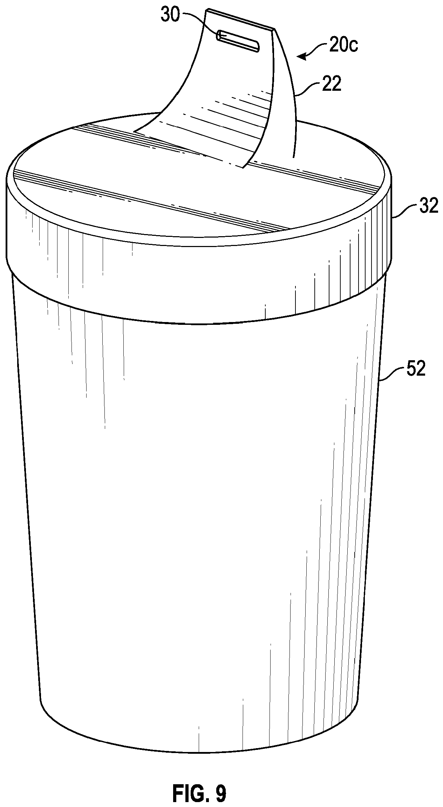

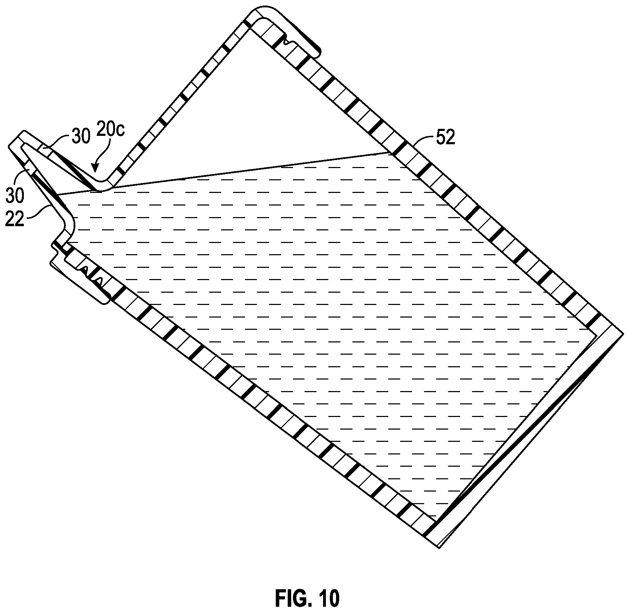

While feeding spouts have been shown and described for use with a flexible pouch-type food container body, a feeding spout constructed in accordance with the inventive concepts disclosed herein can be used for any other suitable food container such as a bottle or cup. FIG. 9 and FIG. 10 show a feeding spout 20c not forming part of the present invention, which is used with a cup 52 (commonly known as a "sippy cup"). Upon tipping the cup 52, the flowable product contained therein can be sucked through the feeding spout 20c and out through the slits 30 to enter at the front of the mouth.

The feeding spout 20c may be formed in any manner known in the art or otherwise contemplated by a person having ordinary skill in the art, so long as the feeding spout 20c can function in accordance with the presently disclosed inventive concept(s). In one embodiment, the feeding spout 20c and cap 46 are formed using an injection molding process.

In one embodiment, the feeding spouts 20, 20a, 20b, and 20c are formed using a multi-component molding process such as a bi-injection process. Multi-component molding simultaneously injects two materials into a mold through either the same or separate nozzles. There are different types of multi-component molding processes such as, for example, co-injection molding, sandwich molding, bi-injection molding, and interval molding. Bi-injection molding is a process in which two different resins are simultaneously injected at different locations in the same mold. As the materials flow into the mold, they meet along a common interface and cross-polymerize. In addition, other methods of producing the feeding spouts are well known in the art.

The feeding spouts may further include one or more colors, designs, and/or patterns disposed on at least a portion thereof. The color(s), design(s), and/or pattern(s) may include, for example but not by way of limitation, packaging and/or labeling information (including, but not limited to, "use by" dates and/or batch codes), instructions for use, promotional material, company information, logos/trademarks, combinations thereof, and the like. The color(s), design(s) and/or pattern(s) may be disposed on the feeding spouts by any method known in the art, including but not limited to, printing, etching, embossing, texturing, coating, lacquering, application during molding, and the like. The color(s), design(s) and/or pattern(s) may be applied separately or simultaneously and/or may be characterized totally or partially by pearlescent, translucent, transparent, iridescent, or other similar qualities. Each of the above-named characteristics may occur alone or in combination.

The method may further include the step of disposing a predetermined quantity of a product within a flexible pouch, attaching the feeding spout, and hermetically sealing the product within the pouch. Any type of product(s) may be disposed within the flexible pouch, so long as the pouch and feeding spout are capable of functioning as disclosed and/or otherwise contemplated herein. The product(s) may be shelf-stable, or the product(s) may be perishable and thus require refrigerated and/or frozen storage conditions. In addition, the product may be in a solid, semi-solid, semi-liquid, liquid, and/or gaseous form. For example, but not by way of limitation, the product may be selected from the group consisting of baby food, juice, fruit and/or vegetable purees, beverages (milk, coffee, flavored drinks, etc.), beverage concentrate and/or drink mix, other liquid products (e.g., oils, salad dressings, sauces, marinades, vinegar, etc.), condiments (e.g.., ketchup, mustard, relish, honey, butter, etc.), granulated products (e.g., spices, seeds, grains, etc.), processed meat and/or poultry, pet food, pet treats, pet supplies, refrigerated/frozen foods, dairy products, candy and confectionary items, baking supplies, puddings, creams, vegetables, fruit, vegetable and/or fruit-based products (e.g., applesauce), health food products, baked goods, dried fruits and/or nuts, snack foods, breakfast foods (e.g., cereal, oatmeal, granola, etc.), cleaning and other household supplies, health and beauty products (e.g., cosmetics, creams, lotions, shampoo/conditioner, soaps and washes, oils, mouthwashes, etc.), pharmaceutical products, and combinations thereof.

Certain embodiments of the presently disclosed inventive concept(s) are directed to a packaged product that includes a food container body and any of the feeding spouts described or otherwise contemplated herein, along with a product disposed within the food container body.

Another embodiment of the presently disclosed inventive concept(s) is directed to a method of producing a packaged product as described herein above. In the method, a premeasured quantity of a product is disposed within a pouch having a packaging spout, and a feeding spout is then attached to the packaging spout.

An exemplary embodiment not forming part of the present invention is directed to a kit containing at least one of the packaged products described herein above. A kit may include one or more packaged products, such as but not limited to, two or more packaged products, three or more packaged products, four or more packaged products, five or more packaged products, six or more packaged products, seven or more packaged products, eight or more packaged products, nine or more packaged products, ten or more packaged products, eleven or more packaged products, twelve or more packaged products, thirteen or more packaged products, fourteen or more packaged products, fifteen or more packaged products, sixteen or more packaged products, seventeen or more packaged products, eighteen or more packaged products, nineteen or more packaged products, twenty or more packaged products, and the like. Each product packaged with the feeding spout may be the same, or the kit may contain two or more different products.

The kits may further include a display unit on which at least a portion of the packaged product(s)/kit(s) may be disposed and thereby displayed. Display units are well known in the art, and therefore no further discussion thereof is deemed necessary.

The kits may further include one or more sets of instructions. The instructions may explain how to use the kit(s) for display of the packaged product(s) present therein and/or how to produce a display assembly that includes one or more packaged product(s) of the kit(s) disposed on a display unit. Any type of format capable of conveying the desired information (and/or directing a user's attention to a location where said information can be found) may be utilized as the instructions described or otherwise contemplated herein. Non-limiting examples of formats in which the instructions may be provided include written wording and/or pictorial drawings, hardware, software, a website address, a bar code (such as but not limited to, a QR code) that is readable by an imaging device/code reader, combinations thereof, and the like. The instructions may contain static information, or the instructions may be in an interactive form.

Another exemplary embodiment not forming part of the present invention is directed to an assembly. The assembly includes one or more of any of the packaged products having the feeding spout disclosed or otherwise contemplated herein (and/or one or more of the kits containing same) and a display unit on which at least a portion of the packaged product(s)/kit(s) is disposed and thereby displayed.

In particular embodiments of the kits and assemblies, the plurality of packaged product(s) are further defined as a range of food and/or beverage products, each being disposed in food container body having a feeding spout constructed in accordance with the presently disclosed inventive concept(s). The range includes a plurality of different products disposed in containers with feeding spouts that are produced as described herein above. The range may include a plurality of individual products and/or a plurality of kits containing the individual products. The plurality of products may differ in the types of food disposed therein. Alternatively and/or in addition thereto, the plurality of products may differ in the age range/stage to which they are directed. For example, but not by way of limitation, US Published Application No. US2010/0255114, discloses a range of shelf-stable baby food products for meeting the nutritional needs of an infant/child at a specific stage of infant development; these stages include Stage 1 (from about 4 months to about 6 months), Stage 2 (from about 6 months to about 8 months), Stage 3 (from about 8 months to about 12 months), and Stage 4 (from about 12 months to about 36 months). Thus, the plurality of products in the range may include a combination of foods directed to two or more of Stages 1-4 listed above.

Yet another further exemplary embodiment not forming part of the present invention is directed to a method of providing a range of food and/or beverage products, each being disposed in a container with a feeding spout constructed in accordance with the presently disclosed inventive concept(s). The range may include a plurality of individual packaged products and/or a plurality of kits containing the individual packaged products. The range of food and/or beverage products container with the feeding spout constructed in accordance with the presently disclosed inventive concept(s) is displayed for perusal by consumers, so that a consumer can select one or more products from the range. The range of products is displayed with a desired visual appearance based upon the structures of the flexible pouches, which provide greater stability when in the upright position.

The combinations of any of the method steps described herein above may be performed simultaneously or wholly or partially sequentially. In addition, the exemplary sequences of method steps provided herein above are for the purposes of illustration only; it will be understood that the individual steps, as well as the particular order of steps, may vary, and the sequence of steps may be performed in any order, so long as the materials and packages described herein are capable of functioning in accordance with the presently disclosed inventive concept(s).

Thus, in accordance with the presently disclosed inventive concept(s), there has been provided feeding spout, food containers, and packaged products formed therefrom, as well as methods of producing feeding spouts that fully satisfy the advantages set forth herein above. Although the presently disclosed inventive concept(s) has been described in conjunction with the specific language set forth herein above, it is evident that many alternatives, modifications, and variations will be apparent to those skilled in the art. Accordingly, it is intended to embrace all such alternatives, modifications, and variations that fall within the scope of the appended claims.

## Claims

1. A feeding spout (20; 20a; 20b) for use with a food package, the feeding spout (20; 20a; 20b) comprising:
a hollow tubular portion (22; 22a) having a tube wall (24; 24a), an open end (26; 26a), and a closed end (28; 28a); and
a collar portion (32) integrally connected with the open end (26; 26a) of the hollow tubular portion (22; 22a), the collar portion (32) being sealingly securable to the food package,
**characterized in that** the tube wall (24; 24a) has two or more slits (30; 30a) therethrough offset from the closed end (28; 28a).

2. The feeding spout (20; 20a;20b) of claim 1, wherein the slits (30; 30a) are aligned circumferentially and offset at a distance of from about 2 mm to about 20 mm from the closed end (28; 28a), or
wherein
the feeding spout (20; 20a; 20b) has a first slit and a second slit (30; 30a), wherein the first slit is aligned circumferentially and positioned opposite the second slit at a distance of from about 2 mm to about 20 mm from the closed end (28; 28a).

3. The feeding spout (20; 20a; 20b) of any of claims 1 to 2, wherein the feeding spout (20; 20a; 20b) is made out of a rigid resin selected from the group consisting of polyethylene (PE), high density polyethylene (HDPE), polypropylene (PP), polyethylene terephthalate (PET), polylactide (PLA), and combinations thereof.

4. The feeding spout (20; 20a; 20b) of claim 1, further comprising a flange (44) circumferentially disposed about the collar portion (32) wherein the flange (44) can be made out of a rigid resin selected from the group consisting of polyethylene (PE), high density polyethylene (HDPE), polypropylene (PP), polyethylene terephthalate (PET), polylactide (PLA), and combinations thereof, or
wherein the flange (44) can be made of a soft resin selected from the group consisting of silicone, neoprene, chloroprene rubber, ethylene propylene diene terpolymer (EPDM), and combinations thereof.

5. The feeding spout (20; 20a; 20b) of any of claims 1 to 2, wherein the tube wall (24; 24a) is made of a soft resin selected from the group consisting of silicone, neoprene, chloroprene rubber, ethylene propylene diene terpolymer (EPDM), and combinations thereof.

6. The feeding spout (20; 20a; 20b) of claim 5, wherein the collar portion (32) is threaded and at least threads of the threaded collar portion (32) are made of a rigid resin selected from the group consisting of high density polyethylene (HDPE), polypropylene (PP), and combinations thereof.

7. The feeding spout (20; 20a; 20b) of any of claims 1 to 6, wherein the collar portion (32) is sealingly securable to the food package using a technique selected from the group consisting of snap-fitting, press-fitting, threading, friction-fitting, and combinations thereof.

8. A package in which a flowable product may be contained, the package comprising:
a main package body having a packaging spout (14); and
the feeding spout (20; 20a; 20b) of claim 1;
wherein, the packaging spout (14) is externally threaded, and the feeding spout (20; 20a; 20b) has an internally threaded collar portion (32) for receiving the externally threaded packaging spout (14).

9. A package in which a flowable product may be contained, the package comprising:
a package body; and
the feeding spout (20; 20a; 20b) of claim 1 connected directly to the package body.

10. The package of any one of claims 8 to 9, wherein the package is selected from the group consisting of a flexible pouch, a bottle, a drink box and a sippy cup.

11. The package of any one of claims 8 to 10, further comprising a cap (46) shaped to fit over the feeding spout (20a) and flange (44), if present, and hermetically seal the product in the flexible pouch.

12. A method of producing the feeding spout (20; 20a; 20b) of claim 1 the collar portion being a threaded collar portion (32) integral with the open end (26; 26a) of the hollow tubular portion (22; 22a), the method comprising:
using an injection molding process to form the feeding spout (20; 20a; 20b) from a rigid resin selected from the group consisting of polyethylene (PE), high density polyethylene (HDPE), polypropylene (PP), polyethylene terephthalate (PET), polylactide (PLA), and combinations thereof.

13. A method of producing the feeding spout (20; 20a; 20b) of claim 1, the collar portion being a threaded collar portion (32) integral with the open end (26; 26a) of the hollow tubular portion (22; 22a), the method comprising:
using a bi-injection process to form the feeding spout (20; 20a; 20b); wherein a soft resin is injected for the hollow tubular portion (22; 22a) and a rigid resin is injected for the threaded collar portion (32), wherein
the soft resin is selected from the group consisting of silicone, neoprene, chloroprene rubber, ethylene propylene diene terpolymer (EPDM), and combinations thereof, and wherein
the rigid resin is selected from the group consisting of polyethylene (PE), high density polyethylene (HDPE), polypropylene (PP), polyethylene terephthalate (PET), polylactide (PLA), and combinations thereof.

14. The method of claim 12 or claim 13, further comprising the step of injection molding a cap (46) formed to fit over the feeding spout (20a).

15. A packaged product, comprising:
a package of any one of claims 8 to 11; and
a predetermined quantity of a product disposed and sealed within the flexible pouch, wherein the product is advantageously selected from the group consisting of baby food, juice, fruit and/or vegetable purees, beverages, beverage concentrate and/or drink mixes, other liquid products, condiments, granulated products, processed meat and/or poultry, pet food, pet treats, pet supplies, refrigerated/frozen foods, dairy products, candy and confectionary items, baking supplies, puddings, creams, vegetables, fruit, vegetable and/or fruit-based products, health food products, baked goods, dried fruits and/or nuts, snack foods, breakfast foods, cleaning and other household supplies, health and beauty products, pharmaceutical products, and combinations thereof.

## Patentansprüche

1. Zuführtülle (20; 20a; 20b) zur Verwendung mit einer Lebensmittelverpackung, wobei die Zuführtülle (20; 20a; 20b) umfasst:
einen hohlen röhrenförmigen Abschnitt (22; 22a), der eine Rohrwand (24; 24a), ein offenes Ende (26; 26a) und ein geschlossenes Ende (28; 28a) aufweist; und
einen Kragenabschnitt (32), der einstückig mit dem offenen Ende (26; 26a) des hohlen röhrenförmigen Abschnitts (22; 22a) verbunden ist, wobei der Kragenabschnitt (32) abdichtend an der Lebensmittelverpackung befestigungsfähig ist, **dadurch gekennzeichnet, dass** die Rohrwand (24; 24a) zwei oder mehr durch sie hindurch verlaufende Schlitze (30; 30a) aufweist, die von dem geschlossenen Ende (28; 28a) versetzt sind.

2. Zuführtülle (20; 20a; 20b) nach Anspruch 1, wobei die Schlitze (30; 30a) in Umfangsrichtung ausgerichtet und in einem Abstand von etwa 2 mm bis etwa 20 mm von dem geschlossenen Ende (28; 28a) versetzt sind, oder
wobei die Zuführtülle (20; 20a; 20b) einen ersten Schlitz und einen zweiten Schlitz (30; 30a) aufweist, wobei der erste Schlitz in Umfangsrichtung ausgerichtet und gegenüber dem zweiten Schlitz in einem Abstand von etwa 2 mm bis etwa 20 mm vom geschlossenen Ende (28; 28a) positioniert ist.

3. Zuführtülle (20; 20a; 20b) nach einem der Ansprüche 1 bis 2, wobei die Zuführtülle (20; 20a; 20b) aus einem starren Harz hergestellt ist, das ausgewählt ist aus der Gruppe bestehend aus Polyethylen (PE), Polyethylen hoher Dichte (high density polyethylene, HDPE), Polypropylen (PP), Polyethylenterephthalat (PET), Polylactid (PLA) und Kombinationen davon.

4. Zuführtülle (20; 20a; 20b) nach Anspruch 1, ferner umfassend einen Flansch (44), der umlaufend um den Kragenabschnitt (32) angeordnet ist, wobei der Flansch (44) aus einem starren Harz hergestellt sein kann, das ausgewählt ist aus der Gruppe bestehend aus Polyethylen (PE), Polyethylen hoher Dichte (HDPE), Polypropylen (PP), Polyethylenterephthalat (PET), Polylactid (PLA) und Kombinationen davon, oder
wobei der Flansch (44) aus einem weichen Harz hergestellt sein kann, das ausgewählt ist aus der Gruppe bestehend aus Silikon, Neopren, Chloroprenkautschuk, Ethylen-Propylen-Dien-Terpolymer (EPDM) und Kombinationen davon.

5. Zuführtülle (20; 20a; 20b) nach einem der Ansprüche 1 bis 2, wobei die Rohrwand (24; 24a) aus einem weichen Harz hergestellt ist, das ausgewählt ist aus der Gruppe bestehend aus Silikon, Neopren, Chloroprenkautschuk, Ethylen-Propylen-Dien-Terpolymer (EPDM) und Kombinationen davon.

6. Zuführtülle (20; 20a; 20b) nach Anspruch 5, wobei der Kragenabschnitt (32) mit Gewinde versehen ist und zumindest Gewindegänge des mit Gewinde versehenen Kragenabschnitts (32) aus einem starren Harz hergestellt sind, das ausgewählt ist aus der Gruppe bestehend aus Polyethylen hoher Dichte (HDPE), Polypropylen (PP) und Kombinationen davon.

7. Zuführtülle (20; 20a; 20b) nach einem der Ansprüche 1 bis 6, wobei der Kragenabschnitt (32) dichtend an der Lebensmittelverpackung unter Verwendung einer Technik befestigungsfähig ist, die ausgewählt ist aus der Gruppe bestehend aus Einschnappen, Einpressen, Verschrauben, Reibschluss und Kombinationen davon.

8. Verpackung, in der ein fließfähiges Produkt enthalten sein kann, wobei die Verpackung umfasst:
einen Hauptverpackungskörper, der eine Verpackungstülle (14) aufweist; und
die Zuführtülle (20; 20a; 20b) nach Anspruch 1; wobei die Verpackungstülle (14) mit einem Außengewinde versehen ist und die Zuführtülle (20; 20a; 20b) einen mit Innengewinde versehenen Kragenabschnitt (32) zum Aufnehmen der mit Außengewinde versehenen Verpackungstülle (14) aufweist.

9. Verpackung, in der ein fließfähiges Produkt enthalten sein kann, wobei die Verpackung umfasst:
einen Verpackungskörper; und
die Zuführtülle (20; 20a; 20b) nach Anspruch 1, die direkt mit dem Verpackungskörper verbunden ist.

10. Verpackung nach einem der Ansprüche 8 bis 9, wobei die Verpackung ausgewählt ist aus der Gruppe bestehend aus einem flexiblen Beutel, einer Flasche, einer Getränkebox und einem Trinkbecher.

11. Verpackung nach einem der Ansprüche 8 bis 10, ferner umfassend eine Kappe (46), die so geformt ist, dass sie über die Zuführtülle (20a) und den Flansch (44), falls vorhanden, passt und das Produkt im flexiblen Beutel hermetisch abdichtet.

12. Verfahren zum Herstellen der Zuführtülle (20; 20a; 20b) nach Anspruch 1, wobei der Kragenabschnitt ein mit Gewinde versehener Kragenabschnitt (32) ist, der in das offene Ende (26; 26a) des hohlen röhrenförmigen Abschnitts (22; 22a) integriert ist, wobei das Verfahren umfasst:
Verwenden eines Spritzgussverfahrens, um die Zuführtülle (20; 20a; 20b) aus einem starren Harz zu bilden, das ausgewählt ist aus der Gruppe bestehend aus Polyethylen (PE), Polyethylen hoher Dichte (HDPE), Polypropylen (PP), Polyethylenterephthalat (PET), Polylactid (PLA) und Kombinationen davon.

13. Verfahren zum Herstellen der Zuführtülle (20; 20a; 20b) nach Anspruch 1, wobei der Kragenabschnitt ein mit Gewinde versehener Kragenabschnitt (32) ist, der in das offene Ende (26; 26a) des hohlen röhrenförmigen Abschnitts (22; 22a) integriert ist, wobei das Verfahren umfasst:
Verwenden eines Zweifacheinspritzprozesses zum Bilden der Zuführtülle (20; 20a; 20b);
wobei ein weiches Harz für den hohlen röhrenförmigen Abschnitt (22; 22a) eingespritzt wird und ein starres Harz für den Gewindekragenabschnitt (32) eingespritzt wird, wobei
das weiche Harz ausgewählt wird aus der Gruppe bestehend aus Silikon, Neopren, Chloroprenkautschuk, Ethylen-Propylen-Dien-Terpolymer (EPDM) und Kombinationen davon, und wobei
das starre Harz ausgewählt wird aus der Gruppe bestehend aus Polyethylen (PE), Polyethylen hoher Dichte (HDPE), Polypropylen (PP), Polyethylenterephthalat (PET), Polylactid (PLA) und Kombinationen davon.

14. Verfahren nach Anspruch 12 oder Anspruch 13, ferner umfassend den Schritt des Spritzgießens einer Kappe (46), die so ausgebildet wird, dass sie über die Zuführtülle (20a) passt.

15. Verpacktes Produkt, umfassend:
eine Verpackung nach einem der Ansprüche 8 bis 11; und
eine vorgegebene Menge eines Produkts, das innerhalb des flexiblen Beutels angeordnet und versiegelt ist, wobei das Produkt vorteilhafterweise ausgewählt ist aus der Gruppe bestehend aus Babynahrung, Saft, Obst- und/oder Gemüsepürees, Getränken, Getränkekonzentrat und/oder Getränkemischungen, anderen flüssigen Produkten, Gewürzen, granulierten Produkten, verarbeitetem Fleisch und/oder Geflügel, Heimtiernahrung, Heimtierleckerli, Heimtierbedarf, gekühlten/gefrorenen Lebensmitteln, Milchprodukten, Süßwaren und Süßwarenartikeln, Backwaren, Puddings, Cremes, Gemüse, Obst, Produkten auf Gemüse- und/oder Obstbasis, gesundheitsfördernden Lebensmittelprodukten, Backwaren, getrockneten Früchten und/oder Nüssen, Snack-Lebensmitteln, Frühstückslebensmitteln, Reinigungs- und anderen Haushaltsprodukten, Gesundheits- und Schönheitsprodukten, pharmazeutischen Produkten und Kombinationen davon.

## Revendications

1. Bec d'alimentation (20 ; 20a ; 20b) destiné à être utilisé avec un emballage alimentaire, le bec d'alimentation (20 ; 20a ; 20b) comprenant :
une partie tubulaire creuse (22 ; 22a) dotée d'une paroi de tube (24 ; 24a), une extrémité ouverte (26 ; 26a), et une extrémité fermée (28 ; 28a) ; et
une partie de collier (32) reliée de manière solidaire à l'extrémité ouverte (26 ; 26a) de la partie tubulaire creuse (22 ; 22a), la partie de collier (32) pouvant être fixée de manière étanche à l'emballage alimentaire, **caractérisé en ce que** la paroi de tube (24 ; 24a) présente deux fentes ou plus (30 ; 30a) à travers elle, décalées de l'extrémité ouverte (28 ; 28a).

2. Bec d'alimentation (20 ; 20a ; 20b) selon la revendication 1, dans lequel les fentes (30 ; 30a) sont alignées circonférentiellement et décalées à une distance d'environ 2 millimètres à environ 20 millimètres de l'extrémité fermée (28 ; 28a), ou
dans lequel le bec d'alimentation (20 ; 20a ; 20b) présente une première fente et une deuxième fente (30 ; 30a), dans lequel la première fente est alignée circonférentiellement et positionnée à l'opposé de la deuxième fente à une distance d'environ 2 millimètres à environ 20 millimètres de l'extrémité fermée (28 ; 28a).

3. Bec d'alimentation (20 ; 20a ; 20b) selon l'une quelconque des revendications 1 à 2, dans lequel le bec d'alimentation (20 ; 20a ; 20b) est constitué d'une résine rigide choisie dans le groupe constitué par le polyéthylène (PE), le polyéthylène haute densité (HDPE), le polypropylène (PP), le polyéthylène téréphtalate (PET), le polylactide (PLA), et leurs combinaisons.

4. Bec d'alimentation (20 ; 20a ; 20b) selon la revendication 1, comprenant en outre une bride (44) disposée circonférentiellement autour de la partie de collier (32), dans lequel la bride (44) peut être réalisée en une résine rigide choisie dans le groupe constitué par le polyéthylène (PE), le polyéthylène haute densité (HDPE), le polypropylène (PP), le polyéthylène téréphtalate (PET), le polylactide (PLA), et leurs combinaisons, ou
dans lequel la bride (44) peut être faite d'une résine molle choisie dans le groupe constitué par le silicone, le néoprène, le caoutchouc chloroprène, le terpolymère d'éthylène-propylène-diène (EPDM), et leurs combinaisons.

5. Bec d'alimentation (20 ; 20a ; 20b) selon l'une quelconque des revendications 1 à 2, dans lequel la paroi de tube (24 ; 24a) est réalisée en une résine molle choisie dans le groupe constitué par le silicone, le néoprène, le caoutchouc chloroprène, le terpolymère éthylène propylène diène (EPDM), et leurs combinaisons.

6. Bec d'alimentation (20 ; 20a ; 20b) selon la revendication 5, dans lequel la partie de collier (32) est filetée et au moins des filets de la partie de collier filetée (32) sont constitués d'une résine rigide choisie dans le groupe constitué par le polyéthylène haute densité (HDPE), le polypropylène (PP) et leurs combinaisons.

7. Bec d'alimentation (20 ; 20a ; 20b) selon l'une quelconque des revendications 1 à 6, dans lequel la partie de collier (32) peut être fixée de manière étanche à l'emballage alimentaire en utilisant une technique choisie dans le groupe constitué par l'encliquetage, l'ajustement par pression, le filetage, l'ajustement par friction, et leurs combinaisons.

8. Emballage dans lequel un produit fluide peut être contenu, l'emballage comprenant :
un corps principal d'emballage doté d'un bec verseur de conditionnement (14); et
le bec d'alimentation (20 ; 20a ; 20b) selon la revendication 1 ; dans lequel, le bec de conditionnement (14) est fileté extérieurement, et le bec d'alimentation (20 ; 20a ; 20b) présente une partie de collier fileté intérieurement (32) pour recevoir le bec de conditionnement fileté extérieurement (14).

9. Emballage dans lequel un produit fluide peut être contenu, l'emballage comprenant :
un corps d'emballage ; et
le bec d'alimentation (20 ; 20a ; 20b) selon la revendication 1, relié directement au corps d'emballage.

10. Emballage selon l'une quelconque des revendications 8 à 9, dans lequel l'emballage est choisi dans le groupe constitué par un sachet souple, une bouteille, une boîte pour boissons et une coupelle souple.

11. Emballage selon l'une quelconque des revendications 8 à 10, comprenant en outre un capuchon (46) formé pour s'adapter sur le bec d'alimentation (20a) et la bride (44), s'il est présent, et sceller hermétiquement le produit dans le sachet souple.

12. Procédé de production du bec d'alimentation (20 ; 20a ; 20b) selon la revendication 1, la partie de collier étant une partie de collier filetée (32) solidaire de l'extrémité ouverte (26 ; 26a) de la partie tubulaire creuse (22 ; 22a), le procédé comprenant :
l'utilisation d'un procédé de moulage par injection pour former le bec d'alimentation (20 ; 20a ; 20b) à partir d'une résine rigide choisie dans le groupe constitué par le polyéthylène (PE), le polyéthylène haute densité (HDPE), le polypropylène (PP), le polyéthylène téréphtalate (PET), le polylactide (PLA), et leurs combinaisons.

13. Procédé de production du bec d'alimentation (20 ; 20a ; 20b) selon la revendication 1, la partie de collier étant une partie de collier filetée (32) solidaire de l'extrémité ouverte (26 ; 26a) de la partie tubulaire creuse (22 ; 22a), le procédé comprenant :
l'utilisation d'un processus de bi-injection pour former le bec d'alimentation (20 ; 20a ; 20b) ;
dans lequel une résine molle est injectée pour la partie tubulaire creuse (22 ; 22a) et une résine rigide est injectée pour la partie de collier filetée (32), dans lequel
la résine molle est choisie dans le groupe constitué par le silicone, le néoprène, le caoutchouc chloroprène, le terpolymère d'éthylène-propylène-diène (EPDM) et leurs combinaisons, et dans lequel
la résine rigide est choisie dans le groupe constitué par le polyéthylène (PE), le polyéthylène haute densité (HDPE), le polypropylène (PP), le polyéthylène téréphtalate (PET), le polylactide (PLA), et leurs combinaisons.

14. Procédé selon la revendication 12 ou la revendication 13, comprenant en outre l'étape de moulage par injection d'un capuchon (46) formé pour s'adapter sur le bec d'alimentation (20a).

15. Produit conditionné comprenant :
un emballage selon l'une quelconque des revendications 8 à 11 ; et
une quantité prédéterminée d'un produit disposé dans le sachet flexible, dans lequel le produit est avantageusement choisi dans le groupe constitué d'aliments pour bébé, jus, purées de fruits et/ou légumes, boissons, concentré de boisson et/ou mélanges à boire, autres produits liquides, condiments, produits granuleux, viande et/ou volaille transformées, aliments pour animaux de compagnie, friandises pour animaux de compagnie, alimentation pour animaux de compagnie, aliments réfrigérés/congelés, produits laitiers, bonbons et articles de confiserie, articles de boulangerie, puddings, crèmes, légumes, fruits, produits à base de légumes et/ou fruits, produits alimentaires sains, produits cuits, fruits secs et/ou fruits à coque, aliments pour en-cas, aliments pour petit-déjeuner, fournitures de nettoyage et autres fournitures à usage ménager, produits pour la santé et la beauté, produits pharmaceutiques et leurs combinaisons.
